# EUROPEAN PATENT SPECIFICATION

(11) **EP 3 606 831 B1**
(45) Date of publication and mention of the grant of the patent: **10.05.2023**
(21) Application number: 18713687.4
(22) Date of filing: 29.03.2018
(51) Int. Cl.: B65B 43/18, B65G 47/91, B65G 47/90

(54) **PICK AND PLACE STATION**
AUFNAHME- UND ABLAGESTATION
POSTE DE SAISIE ET DE PLACEMENT

(30) Priority: 03.04.2017 IT 201700036039
(43) Date of publication of application: 12.02.2020
(73) Proprietor: I.M.A. Industria Macchine Automatiche S.p.A., 40064 Ozzano dell'Emilia (BO) (IT)
(72) Inventor: SASSI, Fabio, 40069 Zola Predosa (IT); PAPPALARDO, Giacinto Francesco, 40100 Bologna (IT)
(74) Representative: Modiano, Micaela Nadia
(86) International application number: PCT/EP2018/058099
(87) International publication number: WO 2018/184983

(56) References cited:
- WO-A1-2007/015049
- WO-A1-2014/187486
- WO-A2-03/006214
- ES-A2- 2 559 304
- US-A1- 2005 079 043
- US-A1- 2007 081 882
- US-B1- 6 382 902

## Description

The present invention relates to a pick and place station for components preferably selected from units and/or products of various kinds, product storage racks, covering sheets, cases and the like.

It should be noted, with particular reference to covering sheets, that it is known to use two different types of shaped sheets (blanks) to provide box-like bodies that are generally parallelepiped in shape: in fact shaped sheets are used (cut out according to a preestablished shape generally by way of a die punching process), which, following suitable folding and gluing operations, assume the desired box-like shape structure (these are generally called "flat sheets"); in other cases, covering sheets are used which have already been subjected to a first folding and gluing operation (these are called "pre-glued").

The present invention makes it possible to execute picking and placing operations on both kinds of covering sheets, as well as on generic components for which an orientation list has been supplied previously.

Conventional pick and place stations can comprise a rotating carousel wherein at least one element is designed to perform the picking and placing operations proper during the rotation of that carousel.

The use is known of a specific motor drive unit that enables the movement of the gripping element by virtue of adapted mechanical transmission means, such as toothed elements, cams and the like. WO 2007/015049 A1 discloses a pick and place station according to the preamble of claim 1.

The main problem linked to the pick and place stations described above is their limited versatility: if it is necessary to change the format of the component to be processed, or to modify its trajectory due to sudden requirements, it is in fact necessary to substitute at least a part of the mechanical transmission means. Each toothed element and each cam in fact will be specially designed to allow a particular trajectory and/or a particular type of component to be manipulated.

The aim of the present invention is to solve the above mentioned drawbacks, by providing a pick and place station with trajectories that can be easily reconfigured, and which therefore is highly versatile.

Within this aim, an object of the invention is to provide a pick and place station that is capable of operating under conditions of continuous motion, random motion, and intermittent motion.

Another object of the invention is to provide a pick and place station that is also adapted to operate at high speeds.

Another object of the invention is to provide a pick and place station that is resistant to malfunctions.

A still further object of the present invention is to provide a pick and place station that is low cost, easily and practically implemented and safely applied.

This aim, these objects and others that will become better apparent hereinafter are achieved by the station according to claim 1.

Further characteristics and advantages of the invention will become better apparent from the detailed description that follows of a preferred, but not exclusive, embodiment of the pick and place station according to the invention, which is illustrated by way of non-limiting example in the accompanying drawings, wherein:

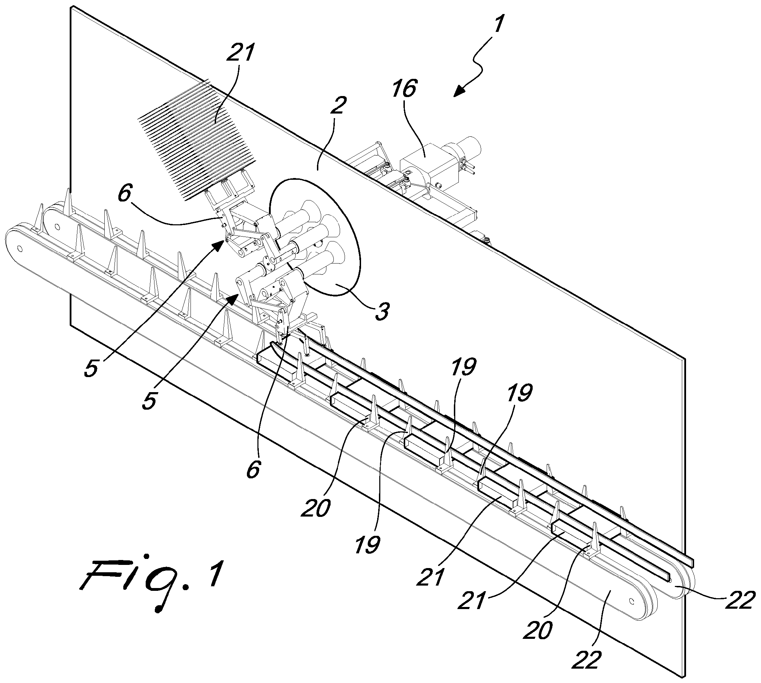

Figure 1 is a perspective view of a pick and place station according to the invention in a possible example embodiment thereof intended for manipulating shaped sheets that define box-like bodies of different types in a first operating configuration;

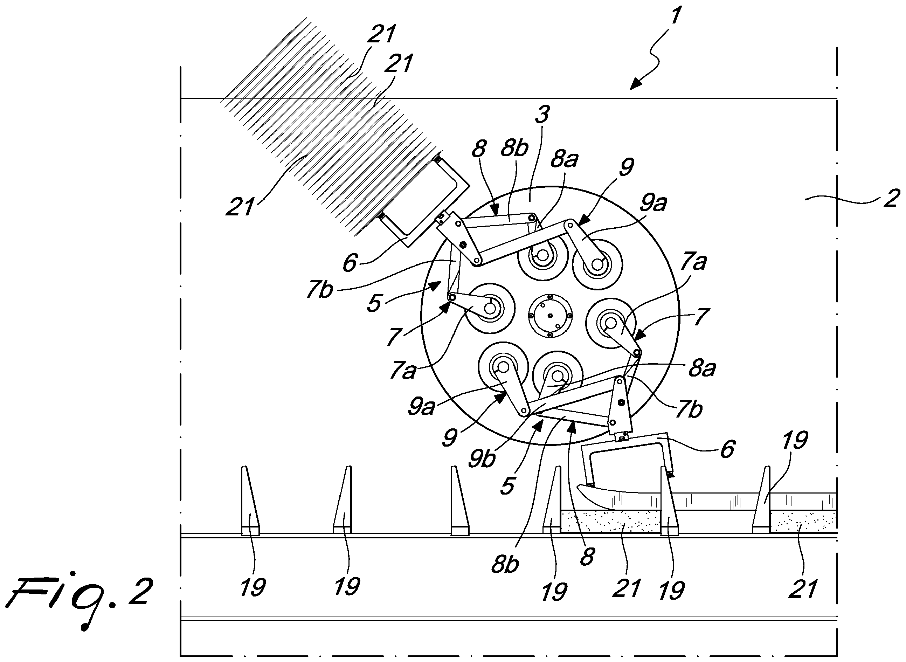

Figure 2 is a front elevation view of the station in Figure 1;

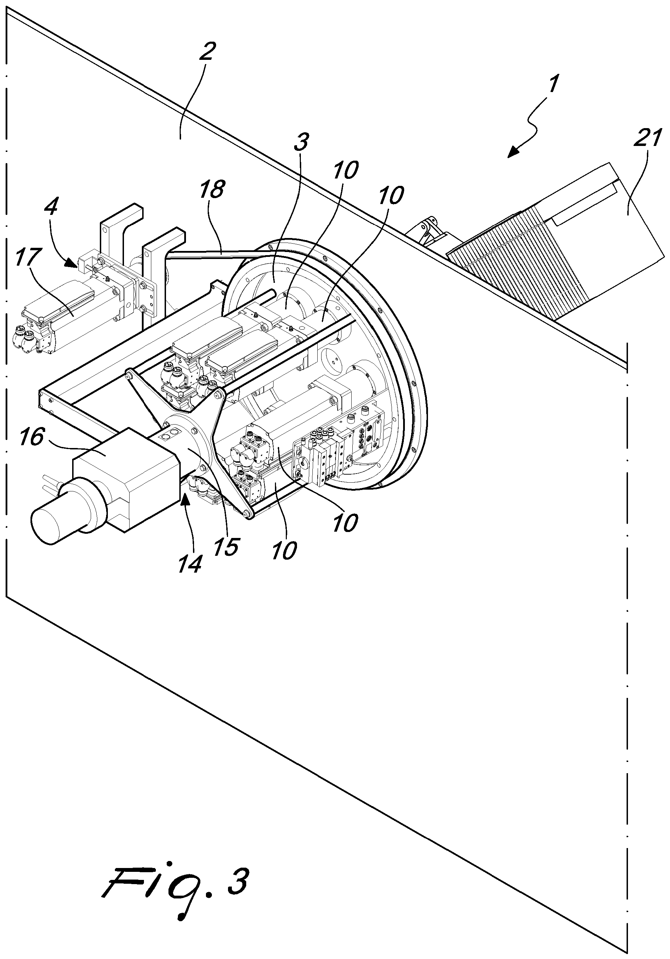

Figure 3 is a perspective view from behind of the station in Figure 1;

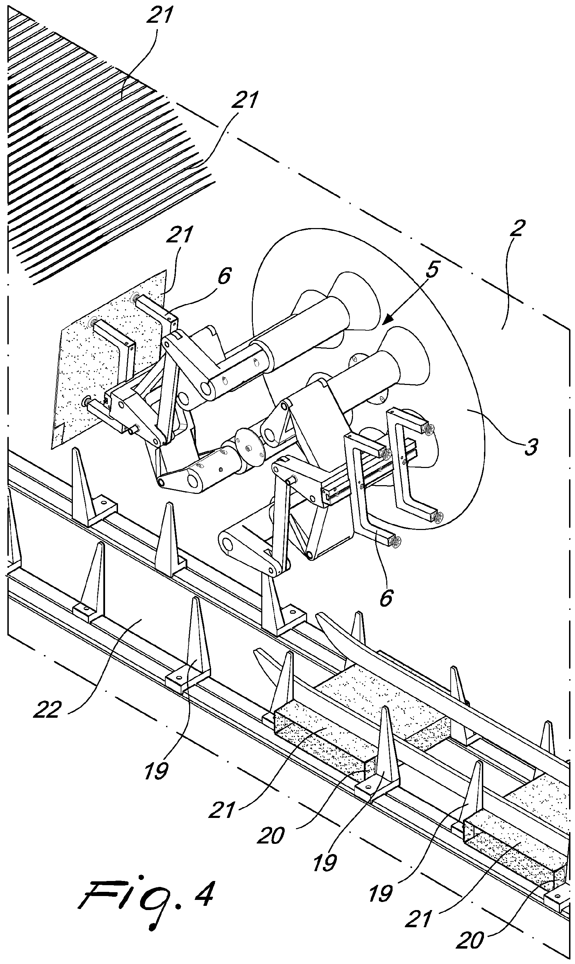

Figure 4 is a perspective view of the station in Figure 1 in a second operating configuration;

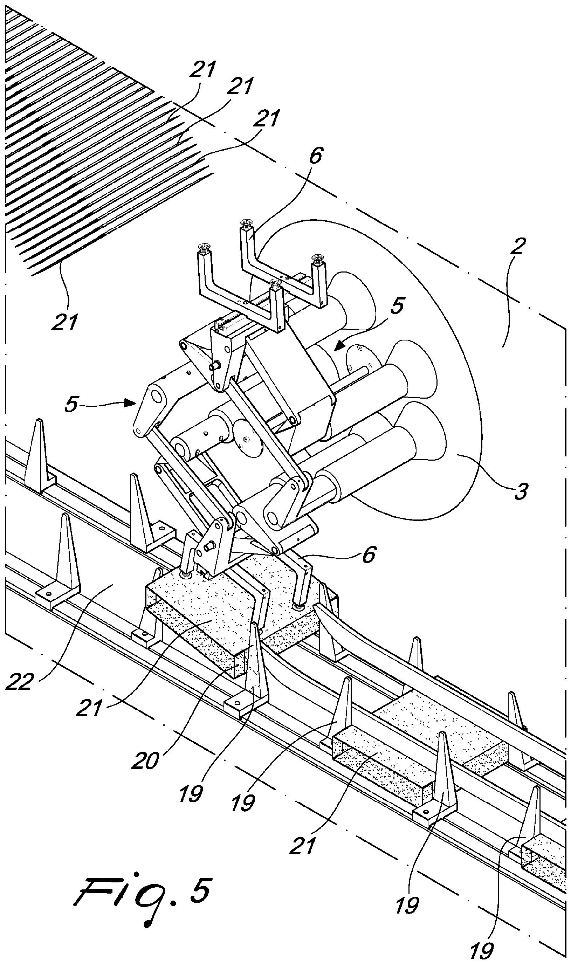

Figure 5 is a perspective view of the station in Figure 1 in a third operating configuration;

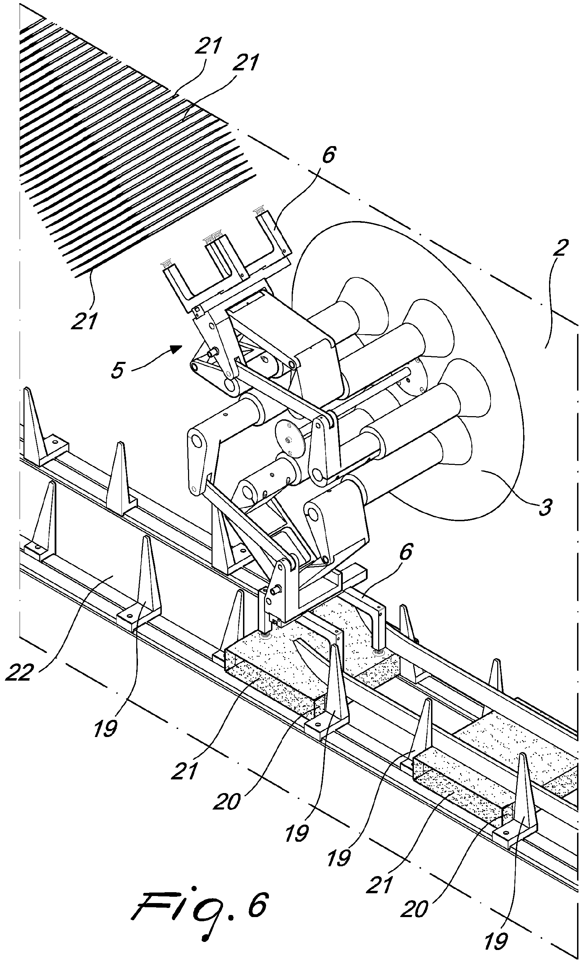

Figure 6 is a perspective view of the station in Figure 1 in a fourth operating configuration;

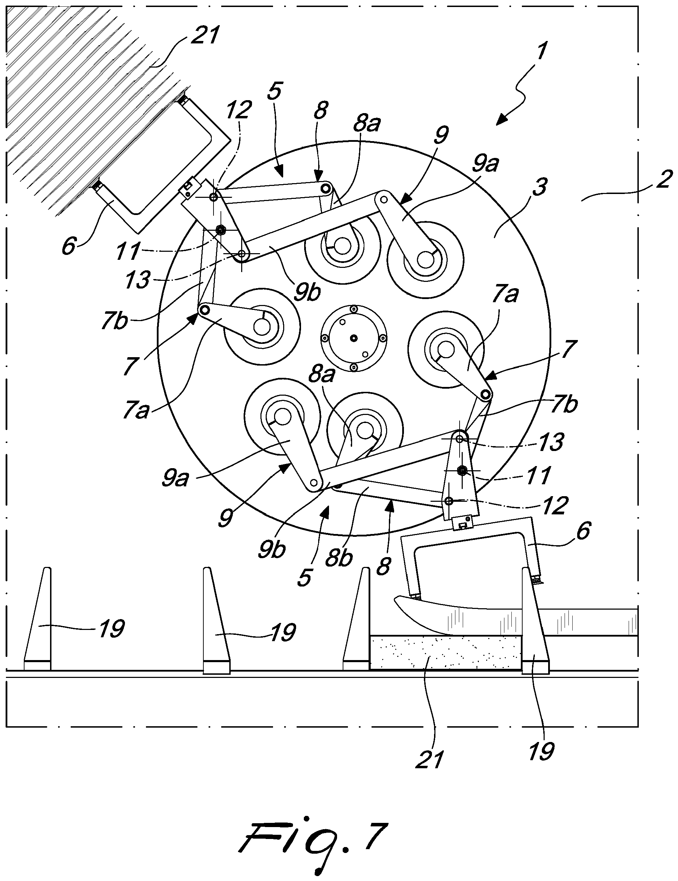

Figure 7 is an enlarged view of Figure 2.

With particular reference to the figures, the reference numeral 1 generally designates a pick and place station.

The station 1 according to the invention comprises a fixed frame 2 and at least one carousel 3 which can rotate with respect to the frame 2, by the action of a respective motor drive unit 4 and at least one moveable element 5, which is arranged on the at least one carousel 3 and is provided with at least one working head 6 having at least two degrees of freedom.

The at least one moveable element 5 comprises, in turn, at least two distinct articulated arms 7, 8, 9 each of which comprise a crank 7a, 8a, 9a which can rotate with respect to the at least one carousel 3 by the action of at least one respective servomotor 10 and a linkage 7b, 8b, 9b which is pivoted to the at least one corresponding working head 6 about a respective rotation axis.

In particular, with reference to a possible embodiment provided exclusively for the purposes of non-limiting example, the linkage 7b can be pivoted to the head 6 about the axis 11, the linkage 8b can be pivoted to the head 6 about the axis 12, and the linkage 9b can be pivoted to the head 6 about the axis 13.

It is relevant to highlight that the motive force of each crank 7a, 8a and 9a is supplied by the respective servomotor 10, which can be precisely controlled and commanded in order to define specific laws of motion that are independent of the laws of motion of the other servomotors 10 and of the motor drive unit 4: in this manner the combination of the laws of motion of the servomotors 10 will enable the corresponding head 6 that is coupled to the articulated arms 7, 8 and 9, controlled by those servomotors 10, to move with at least two degrees of freedom following any trajectory and performing accelerations, positive and negative, of extent and direction that can vary over time.

It is possible to give the head 6 three degrees of freedom, thus providing for the possibility that it can tilt with respect to the plane containing the articulated arms 7, 8, 9 and/or advance/retreat with respect to such plane.

With particular reference to a specific embodiment of undoubted practical and applicative interest, it should be noted that each articulated arm 7, 8, 9 can conveniently comprise the crank 7a, 8a, 9a that is rigidly coupled to the shaft of the respective servomotor 10: in this manner the servomotor 10 will drive the angular displacements, and the angular speed with which such displacements will be executed, of the respective linkage 7a, 8a, 9a.

In such a case, each linkage 7b, 8b, 9b can positively have a first end pivoted to the corresponding crank 7a, 8a, 9a and a second end (opposite to the first one) pivoted to the at least one working head 6 about a respective rotation axis (the previously-cited axes 11, 12 and 13, with reference to the illustrative and non-limiting example shown previously).

The articulated arms 7, 8 and 9, which, as specified above, are independently moveable with respect to the at least one carousel 3 by the action of respective servomotors 10, are preferably three in number.

Each arm 7, 8, 9 will be able to rotate, with respect to the corresponding carousel 3, about the rotation axis of the respective servomotor 10, and will be pivoted to the at least one working head 6 about a corresponding rotation axis (the previously-cited axes 11, 12 and 13, with reference to the illustrative and non-limiting example shown previously).

The moveable elements 5, provided with the independently motorized articulated arms 7, 8, 9 that are present on each carousel 3, will preferably be at least two in number, mutually offset at a predefined angle.

In any case it is possible to provide carousels 3 with a single element 5 or with a plurality of distinct elements 5, according to the specific application requirements.

It is relevant to note that the station 1 can conveniently comprise an electrofluidic manifold 14: such manifold 14 will be specially shaped for the distribution, via a respective rotor 15 which is integral with the carousel 3, of electric power, electric signals and pneumatic power (be it as a pressurized gas or a specific suction) to the servomotors 10 and, through these, to the working heads 6.

The rotor 15 will be able to rotate with respect to a fixed stator 16, which is integral with the frame of the station.

With particular reference to an embodiment of undoubted practical and applicative interest, each servomotor 10 can positively comprise a controlled electric motor (purely for the purposes of non-limiting example, it should be noted that a brushless motor could be used) and a respective control and management drive (designed to adjust the electric power parameters necessary for the precise control of the speed and of the position of the rotor of the motor), optionally also contained within a single common enclosure.

The embodiment that involves the use of a single component that comprises both the motor and its actuator is advantageous in terms of space occupation, in that the servomotor 10 thus provided will be particularly compact and therefore adapted to be installed on board the station 1 according to the invention without interfering with other components. It should be noted however that servomotors 10 that are constituted by two distinct components (separate motor and actuator) can effectively perform the intended function and therefore be perfectly adapted to be installed in a station 1 according to the invention.

In terms of implementation, it should be noted that the station 1 can be used for any operation of picking and placing any kind of products, packages, semi-finished blanks and the like: for this reason it should be noted that the working head 6 can advantageously comprise grip elements that are actuated preferably electrically and pneumatically: the possibility is not ruled out however (for particular applications) of using hydraulically-actuated grip elements (for example hydraulic grippers if a particularly high clamping force is to be exerted on the product to be picked).

Generally, the grip elements will in any case be selected from grippers, suckers, clamps, suction surfaces and the like.

In the station 1 it is provided that the carousel 3 can rotate with a predefined law of motion with respect to the fixed frame 2: the motor drive unit 4 of each carousel 3 can conveniently comprise a controlled motor 17 and means of coupling the shaft of the motor 17 to the carousel 3.

Such means of coupling can be of the type preferably selected from gears, belts 18, toothed belts, chains and the like.

It should be noted that the station 1 can positively comprise at least two carousels 3 arranged in a cascade: the working head 6 of a first moveable element 5 of at least one first carousel 3 will therefore be effectively moveable between a first configuration of alignment with an area for picking at least one predefined component and a second configuration of alignment with the working head 6 of a second moveable element 5 of at least one second carousel 3. In such embodiment, the second moveable element 5 will in turn be moveable to a third, placing configuration, in which the respective working head 6 is aligned with and proximate to a region for placing the predefined component. The possibility is not ruled out that there could be more than two carousels 3 arranged in a cascade, with reference to specific implementation requirements.

With particular reference to the embodiment shown by way of non-limiting example in the accompanying figures, the placing region can profitably comprise at least one abutment 19 which is shaped for the resting of an edge 20 of a case 21 that is retained by a respective working head 6 and picked by the latter in the flattened configuration for minimal space occupation.

The relative motion between the head 6 (integral with the respective element 5, in turn mounted on the carousel 3) and the abutment 19 (integral with a conveyor belt 22) will cause the opening of the case 21 up until the final shape structure intended for its use.

Advantageously the present invention solves the above mentioned problems, by providing a pick and place station 1 with trajectories that can be easily reconfigured, and which therefore is highly versatile: in fact, via programming the laws of motion of the servomotors 10 and of the motor drive unit 4 it will in fact be possible to modify the trajectory of the working head 6 and therefore to adapt it to the picking and placing of any kind of product, package, semi-finished blank and the like, as well as to the specific operating requirements of the industrial plant in which the station 1 according to the invention will be installed.

Effectively the station 1 has a simple structure and shape, while having excellent versatility insofar as it can be easily reconfigured (via software) by modifying the trajectories and the laws of motion of the working head 6.

Conveniently the station 1 according to the invention is capable of operating under conditions of continuous motion, random motion, and intermittent motion.

The components can therefore be picked and placed during a stop, and also during the motion of the carousel 3 and also, in particular, during any step of such motion (positive, negative or null accelerations).

Positively the station 1 according to the invention can also operate at high speeds. It follows from this that the plant in which it will be installed will have a high level of productivity.

Profitably the station 1 according to the invention is resistant to malfunctions, because it is made up of components that are simple and robust.

Conveniently the station 1 is different from conventional stations.

Positively the pick and place station 1 described herein is easily and practically implemented, implying low cost: such characteristics ensure that the station 1 according to the invention is an innovation that is certain to be safe in use.

The invention, thus conceived, is susceptible of numerous modifications and variations, all of which are within the scope of the appended claims. Moreover, all the details may be substituted by other, technically equivalent elements.

In the embodiments illustrated, individual characteristics shown in relation to specific examples may in reality be interchanged with other, different characteristics, existing in other embodiments.

In practice, the materials employed, as well as the dimensions, may be any according to requirements and to the state of the art.

This application claims priority of Italian Patent Application No. 102017000036039.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A pick and place station that comprises at least one carousel (3) which can rotate with respect to a rotation axis, a first and a second moveable element (5) which can be actuated mutually independently, are mounted so that they can rotate on said at least one carousel (3) and are provided with a respective working head (6) which has at least two degrees of freedom, said first and second moveable element (5) being mutually offset by a predefined angle,
wherein said carousel (3) comprises a controlled motor (17) and means of coupling the shaft of said motor (17) to said carousel (3),
**characterized by**
each moveable element (5) comprising three distinct articulated arms (7, 8, 9), each articulated arm comprising a crank (7a, 8a, 9a) which can rotate with respect to said at least one carousel (3) and a linkage (7b, 8b, 9b) which is pivoted to said working head (6) about a respective rotation axis (12, 13);
wherein each linkage (7b, 8b, 9b) has a first end pivoted to said crank (7a, 8a, 9a) and a second end pivoted to said at least one working head (6) about a respective rotation axis (12, 13);
wherein at least one arm (9) of the three distinct articulated arms (7, 8, 9) of said moveable element (5) is axially offset with respect to the remaining two articulated arms (7, 8) of that moveable element (5), along a direction which is substantially parallel to the rotation axis of the carousel (3) which is defined on a fixed frame (2);
wherein only two linkages (7b, 8b, 9b) of a same articulated arm (7, 8) are pivoted to the same point of the same working head (6), the remaining linkage (7b, 8b, 9b) of that arm (7, 8) being pivoted to a different point of that working head (6); and
wherein the rotation axes of the carousel (3), of the cranks (7a, 8a, 9a) and of the linkages (7b, 8b, 9b) are substantially mutually parallel;
each articulated arm (7, 8, 9) being actuated by a respective servomotor (10) which comprises a controlled electric motor and a respective control and management drive.

2. The station according to claim 1, **characterized in that** each working head (6) comprises grip elements with an actuator of the type preferably selected from electric and pneumatic, grip elements which can be selected from grippers, suckers, clamps, suction surfaces and the like.

3. The station according to one or more of the preceding claims, wherein said means of coupling the shaft of said motor (17) to said carousel (3) are of the type selected from gears, belts (18), toothed belts, chains and the like.

4. The station according to any one of the preceding claims, wherein said controlled electric motor and said respective control and management drive are contained within a single common enclosure.

5. The station according to any one of the preceding claims, **characterized in that** it further comprises an electrofluidic manifold (14) suitable for the distribution, via a respective rotor (15) which is integral with said carousel (3), of electric power, electrical signal, and pneumatic power to said servomotor (10) and to said working heads (6), said rotor (15) being rotatable with respect to a fixed stator (16).

6. The station according to any one of the preceding claims, **characterized in that** it comprises at least two carousels (3) arranged in a cascade, the working head (6) of a first moveable element (5) of at least one first carousel (3) being moveable between a first configuration of alignment with an area for picking at least one predefined component and a second configuration of alignment with the working head (6) of a second moveable element (5) of at least one second carousel (3), said second moveable element (5) being in turn moveable to a third, placing configuration, in which the respective working head (6) is aligned with and proximate to a region for placing the predefined component.

## Patentansprüche

1. Eine Aufnahme- und Ablagestation, die Folgendes umfasst: mindestens ein Karussell (3), das sich um eine Rotationsachse drehen kann, ein erstes und ein zweites bewegliches Element (5), die unabhängig voneinander angetrieben werden können, drehbar auf dem mindestens einen Karussell (3) montiert und mit einem dazugehörigen Arbeitskopf (6) ausgestattet sind, der mindestens zwei Freiheitsgrade hat, wobei das erste und das zweite bewegliche Element (5) voneinander um einen vordefinierten Winkel versetzt sind;
wobei das Karussell (3) einen gesteuerten Motor (17) und Mittel zum Koppeln der Welle des Motors (17) mit dem Karussell (3) umfasst;
**dadurch gekennzeichnet, dass** jedes bewegliche Element (5) drei separate Gelenkarme (7, 8, 9) umfasst, wobei jeder Gelenkarm eine Kurbel (7a, 8a, 9a) umfasst, die sich mit Bezug auf das mindestens eine Karussell (3) drehen kann, und ein Verbindungselement (7b, 8b, 9b), welches drehgelenkig um eine entsprechende Drehachse (12, 13) mit dem Arbeitskopf (6) verbunden ist;
wobei jedes Verbindungselement (7b, 8b, 9b) ein erstes Ende hat, das drehgelenkig mit der Kurbel (7a, 8a, 9a) verbunden ist, und ein zweites Ende, das drehgelenkig um eine entsprechende Drehachse (12, 13) mit dem mindestens einen Arbeitskopf (6) verbunden ist;
wobei mindestens ein Arm (9) der drei separaten Gelenkarme (7, 8, 9) des beweglichen Elements (5) axial von den übrigen zwei Gelenkarmen (7, 8) des beweglichen Elements (5) in einer Richtung versetzt ist, die im Wesentlichen parallel zur Rotationsachse des Karussells (3) ist, das auf einem festen Rahmen (2) bestimmt ist;
wobei nur zwei Verbindungselemente (7b, 8b, 9b) eines selben Gelenkarms (7, 8) drehgelenkig mit demselben Punkt desselben Arbeitskopfs (6) verbunden sind, wobei das restliche Verbindungselement (7b, 8b, 9b) dieses Arms (7, 8) drehgelenkig mit einem anderen Punkt des Arbeitskopfs (6) verbunden ist; und
wobei die Drehachsen des Karussells (3), der Kurbeln (7a, 8a, 9a) und der Verbindungselemente (7b, 8b, 9b) im Wesentlichen zueinander parallel sind;
wobei jeder Gelenkarm (7, 8, 9) von einem entsprechenden Hilfsmotor (10) angetrieben wird, der einen gesteuerten Elektromotor und einen entsprechenden Steuerungs- und Lenkungsantrieb umfasst.

2. Die Station gemäß Anspruch 1, **dadurch gekennzeichnet, dass** jeder Arbeitskopf (6) Greifelemente mit einem Antriebselement von der Art umfasst, die vorzugsweise gewählt ist aus elektrischen und pneumatischen Greifelementen, welche gewählt sein können aus Greifern, Saugnäpfen, Klemmen, Saugoberflächen und dergleichen.

3. Die Station gemäß einem oder mehreren der obigen Ansprüche, wobei die Mittel zur Kopplung der Welle des Motors (17) mit dem Karussell (3) von der Art sind, die gewählt ist aus Zahnrädern, Riemen (18), Zahnriemen, Ketten und dergleichen.

4. Die Station gemäß einem beliebigen der obigen Ansprüche, wobei der gesteuerte Elektromotor und der entsprechende Steuerungs- und Lenkungsantrieb in einem einzigen gemeinsamen Gehäuse enthalten sind.

5. Die Station gemäß einem beliebigen der obigen Ansprüche, **dadurch gekennzeichnet, dass** sie weiter einen Elektrofluid-Verteiler (14) umfasst, geeignet zum Verteilen, über einen entsprechenden Rotor (15), der integral mit dem Karussell (3) ist, von elektrischer Leistung, elektrischen Signalen und pneumatischer Leistung, an den Hilfsmotor (10) und an die Arbeitsköpfe (6), wobei der Rotor (15) im Verhältnis zu einem festen Stator (16) drehbar ist.

6. Die Station gemäß einem beliebigen der obigen Ansprüche, **dadurch gekennzeichnet, dass** sie mindestens zwei in einer Kaskade angeordnete Karussells (3) umfasst, wobei der Arbeitskopf (6) eines ersten beweglichen Elements (5) mindestens eines ersten Karussells (3) beweglich ist zwischen einer ersten Anordnung der Ausrichtung mit einem Bereich zum Aufnehmen mindestens einer vordefinierten Komponente und einer zweiten Anordnung der Ausrichtung eines zweiten beweglichen Elements (5) mindestens eines zweiten Karussells (3) mit dem Arbeitskopf (6), wobei das zweite bewegliche Element (5) wiederum in eine dritte Anordnung der Positionierung beweglich ist, in welcher der entsprechende Arbeitskopf (6) mit einem Bereich zur Positionierung der vordefinierten Komponente ausgerichtet ist und in seiner Nähe liegt.

## Revendications

1. Station de saisie et de placement qui comporte au moins un carrousel (3) qui peut tourner par rapport à un axe de rotation, un premier et un second éléments mobiles (5 )qui peuvent être actionnés de manière mutuellement indépendante, sont montés de sorte qu'ils peuvent tourner sur ledit au moins un carrousel (3) et sont pourvus d'une tête de travail (6) respective qui a au moins deux degrés de liberté, lesdits premier et second éléments mobiles (5) étant mutuellement décalés d'un angle prédéfini,
dans laquelle ledit carrousel (3) comporte un moteur commandé (17) et des moyens pour coupler l'arbre dudit moteur (17) audit carrousel (3),
**caractérisée en ce que** chaque élément mobile (5) comporte trois bras articulés distincts (7, 8, 9), chaque bras articulé comportant une manivelle (7a, 8a, 9a) qui peut tourner par rapport audit au moins un carrousel (3) et une tringlerie (7b, 8b, 9b) qui pivote sur ladite tête de travail (6) autour d'un axe de rotation (12, 13) respectif,
dans laquelle chaque tringlerie (7b, 8b, 9b) a une première extrémité pivotant sur ladite manivelle (7a, 8a, 9a) et une seconde extrémité pivotant sur ladite au moins une tête de travail (6) autour d'un axe de rotation (12, 13) respectif,
dans laquelle au moins un bras (9) des trois bras articulés distincts (7, 8, 9) dudit élément mobile (5) est axialement décalé par rapport aux deux bras articulés restants (7, 8) de cet élément mobile (5), le long d'une direction qui est sensiblement parallèle à l'axe de rotation du carrousel (3) qui est défini sur un bâti fixe (2),
dans laquelle seules deux tringleries (7b, 8b, 9b) d'un même bras articulé (7, 8) pivotent sur le même point de la même tête de travail (6), la tringlerie restante (7b, 8b, 9b) de ce bras (7, 8) pivotant sur un point différent de cette tête de travail (6), et
dans laquelle les axes de rotation du carrousel (3), des manivelles (7a, 8a, 9a) et des tringleries (7b, 8b, 9b) sont sensiblement mutuellement parallèles,
chaque bras articulé (7, 8, 9) étant actionné par un servomoteur (10) respectif qui comporte un moteur électrique commandé et un entraînement de commande et de gestion respectif.

2. Station selon la revendication 1, **caractérisée en ce que** chaque tête de travail (6) comporte des éléments de préhension avec un actionneur du type de préférence choisi parmi des éléments de préhension électriques et pneumatiques qui peuvent être choisis parmi des organes de préhension, des ventouses, des pinces, des surfaces d'aspiration et analogues.

3. Station selon une ou plusieurs des revendications précédentes, dans laquelle lesdits moyens pour coupler l'arbre dudit moteur (17) audit carrousel (3) sont du type choisi parmi des engrenages, des courroies (18), des courroies crantées, des chaînes et analogues.

4. Station selon l'une quelconque des revendications précédentes, dans laquelle ledit moteur électrique commandé et ledit entraînement de commande et de gestion respectif sont contenus à l'intérieur d'une seule enveloppe commune.

5. Station selon l'une quelconque des revendications précédentes, **caractérisée en ce qu'**elle comporte en outre un collecteur électrofluidique (14) adapté pour la distribution, via un rotor (15) respectif qui est solidaire dudit carrousel (3), de puissance électrique, d'un signal électrique et de puissance pneumatique audit servomoteur (10) et à ladite tête de travail (6), ledit rotor (15) pouvant tourner par rapport à un stator fixe (16) .

6. Station selon l'une quelconque des revendications précédentes, **caractérisée en ce qu'**elle comporte au moins deux carrousels (3) agencés en cascade, la tête de travail (6) d'un premier élément mobile (5) d'au moins un premier carrousel (3) pouvant être déplacée entre une première configuration d'alignement avec une zone pour saisir au moins un composant prédéfini et une deuxième configuration d'alignement avec la tête de travail (6) d'un second élément mobile (5) d'au moins un second carrousel (3), ledit second élément mobile (5) pouvant à son tour être déplacé jusqu'à une troisième configuration de placement, dans laquelle la tête de travail (6) respective est alignée avec une zone pour placer le composant prédéfini et près de celle-ci.
